# EUROPÄISCHE PATENTSCHRIFT

(11) **EP 1 237 456 B1**
(45) Veröffentlichungstag und Bekanntmachung des Hinweises auf die Patenterteilung: **27.04.2005**
(21) Anmeldenummer: 00977475.3
(22) Anmeldetag: 03.11.2000
(51) Int. Cl.: A47L 1/02, B62D 57/024

(54) **SICHERHEITSEINRICHTUNG FÜR EINE AUF EINER FLÄCHE BEWEGLICHEN VORRICHTUNG**
SECURITY DEVICE FOR A DEVICE THAT CAN BE MOVED ON A SURFACE
DISPOSITIF DE SECURITE DESTINE A UN APPAREIL SE DEPLA ANT SUR UNE SURFACE

(30) Priorität: 07.12.1999 DE 19958890
(43) Veröffentlichungstag der Anmeldung: 11.09.2002
(73) Patentinhaber: BSH Bosch und Siemens Hausgeräte GmbH, 81739 München (DE)
(72) Erfinder: DAMRATH, Joachim, 89429 Bachhagel (DE); KONRAD, Jürgen, 89075 Ulm (DE); BRÜNTRUP, Thomas, 86438 Kissing (DE)
(86) Internationale Anmeldenummer: PCT/EP2000/010849
(87) Internationale Veröffentlichungsnummer: WO 2001/041616

(56) Entgegenhaltungen:
- EP-A- 0 505 956
- DE-C- 19 835 038
- PATENT ABSTRACTS OF JAPAN vol. 009, no. 094 (M-374), 24. April 1985 (1985-04-24) -& JP 59 220468 A (HITACHI SEISAKUSHO KK), 11. Dezember 1984 (1984-12-11)
- PATENT ABSTRACTS OF JAPAN vol. 017, no. 349 (C-1078), 2. Juli 1993 (1993-07-02) -& JP 05 049554 A (TOSHIBA ENG & CONSTR CO LTD), 2. März 1993 (1993-03-02)
- PATENT ABSTRACTS OF JAPAN vol. 016, no. 135 (M-1230), 6. April 1992 (1992-04-06) -& JP 03 294189 A (TOSHIBA CORP), 25. Dezember 1991 (1991-12-25)

## Beschreibung

Die Erfindung bezieht sich auf eine auf einer Fläche beweglichen Vorrichtung, die zum Anhaften an der Fläche Unterdruck zwischen sich und der Fläche erzeugt und eine Sicherheitseinrichtung aufweist, die ein Ablösen von der Fläche überwacht.

Es sind Vorrichtungen bekannt, die mittels Unterdruck eine Anziehungskraft zu einer Fläche erzeugen können und sich auf diese Weise auch entlang von schiefen oder senkrecht stehenden Flächen bewegen können. Solche Vorrichtungen werden insbesondere zum Durchführen von Arbeiten an schwer zugänglichen Flächen verwendet, wie beispielsweise beim Reinigen der Außenflächen von großen Bauwerken. Dabei besteht jedoch die Gefahr, daß die Einrichtung zum Erzeugen der Anziehungskraft der Fläche versagt und sich die Vorrichtung von der Fläche ablöst.

Durch die EP 0 505 956 A1 ist eine derartige Vorrichtung bekannt, bei der als Sicherheitseinrichtung oben am Gebäude eine Winde mit einer Sicherheitsleine vorgesehen ist, an die die Vorrichtung eingehängt wird. Sobald sich die Vorrichtung von der Gebäudefassade ablöst, wird die Winde verriegelt, so daß die Vorrichtung nicht herunterfallen kann. Dies hat insbesonsdere den Nachteil, daß die Vorrichtung erst an der Sicherheitsleine eingehängt werden muß, bevor sie betriebsbereit ist und daß ferner eine zusätzliche Installation am Gebäude nötig ist. Weiterhin wird durch die erforderliche Sicherheitsleine der Aktionsbereich der Vorrichtung eingeschränkt, so daß dieses nicht autonom arbeiten kann.

Eine Vorrichtung gemäß den Oberbegriff des Anspruch 1 ist von JP 03294189A bekannt.

Der vorliegenden Erfindung liegt die Aufgabe zugrunde, eine Vorrichtung der eingangs genannten Art zu schaffen, die sich auf der Fläche vollkommen frei bewegen und bei der ein Herunterfallen verhindert werden kann.

Diese Aufgabe wird durch eine Vorrichtung gemäß Anspruch 1 gelöst.

Vorteilhafterweise weist die Vorrichtung wenigstens ein gegenüber der Vorrichtung bewegliches Fahrwerk auf und überwacht die Sicherheitseinrichtung den Abstand des Fahrwerks zur Vorrichtung, um das Ablösen von der Fläche zu überwachen. Ein solches Fahrwerk ist in der Regel ohnehin vorhanden, um die Vorrichtung in einem vordefinierten Abstand zur Fläche zu halten und es auf der Fläche bewegen zu können. Dazu kann wenigstens einem Fahrwerk eine Antriebseinheit zugeordnet werden. Das wenigstens eine Fahrwerk kann so mit der Vorrichtung verbunden werden, daß es ohne äußere Einflüsse von der Vorrichtung mit leichter Federkraft weggedrückt wird und beim Ansaugen der Vorrichtung an die Fläche bis gegen einen Anschlag hineingedrückt werden kann, so daß die Vorrichtung in dem vordefinierten Abstand zur Fläche gehalten wird. Bei einem Nachlassen der Anziehungskraft unter ein bestimmtes Maß kann das Fahrwerk wieder von der Vorrichtung weggedrückt werden, so daß sich dessen Abstand zur Vorrichtung vergrößert und die Sicherheitseinrichtung anspricht.

Zum Erkennen des Ablösens von der Fläche kann die Sicherheitseinrichtung auch den Unterdruck zwischen der Vorrichtung und der Fläche überwachen. Da der Unterdruck bzw. die Differenz des Umgebungsdrucks zu dem Druck zwischen der Vorrichtung und der Fläche ein direktes Maß für die Anziehungskraft ist, kann so jede Veränderung der Anziehungskraft erkannt werden. Auf diese Weise ist es möglich, vor einem Ablösen der Vorrichtung von der Fläche bereits eine Erhöhung dieses Risikos festzustellen. Zusätzlich kann durch eine Überwachung des Unterdrucks und damit der Anziehungskraft auch der Fall erfaßt werden, daß bei verringerter Anziehungskraft sich die Vorrichtung zwar nicht von der Fläche entfernt, jedoch die Reibung einer Antriebseinheit der Vorrichtung an der Fläche soweit abgenommen hat, daß bei schiefer oder senkrechter Stellung der Fläche die Vorrichtung abrutschen kann.

In einer vorteilhaften Ausführungsform weist die Halteeinrichtung wenigstens einen Saugnapf auf. Saugnäpfe können bei Anwendung auf glatten Flächen, die ohnehin das ausschließliche oder zumindest bevorzugte Anwendungsgebiet von durch Unterdruck anhaftenden Vorrichtungen sind, nach einem einmaligen Andrücken große Lasten über einen längeren Zeitraum halten, ohne daß zusätzliche Maßnahmen zum Aufrechterhalten dieser Haltekräfte erforderlich wären. Um ein besseres Anhalten auch über längere Zeit zu gewährleisten, kann eine Einrichtung zum nochmaligen Andrücken eines an die Fläche angehafteten Saugnapfs vorgesehen sein. Beispielsweise kann der Saugnapf in regelmäßigen Abständen nachgektopft werden. Ferner ist auch denkbar, einen angehafteten Saugnapf regelmäßig oder fortlaufend abzupumpen, um den zum Anhaften nötigen Unterdruck aufrechtzuerhalten.

Ferner kann die Halteeinrichtung auch wenigstens ein Klebverbindungsmittel aufweisen. Dieses kann selbst aus einem weichen und haftenden Material bestehen oder mit einem Klebmittel beschichtet sein. Bevorzugt wird dabei ein Klebmittel verwendet, das sich von der Fläche rückstandsfrei entfernen läßt. Die Verwendung einer klebrigen Haftfläche oder eines Klebstoffes als Halteeinrichtung besitzt insbesondere den Vorteil, daß bis zu einem gewissen Grad Unebenheiten der Fläche toleriert werden können.

Die vorgenannten Ausführungsformen für die Halteeinrichtung sowie für die Überwachung des Ablösens von der Fläche können jeweils auch in Kombination verwendet werden, um ein höheres Maß an Sicherheit zu erreichen.

Um die Vorrichtung nach einem Ansprechen der Sicherheitseinrichtung wieder entfernen zu können, kann sie eine von außen betätigbare Einrichtung zum Lösen der Halteeinrichtung von der Fläche aufweisen. Bei einem Saugnapf als Halteeinrichtung kann die Löseeinrichtung so gestaltet sein, daß in den Innenraum des Saugnapfs Luft eingelassen werden kann, beispielsweise mit Hilfe einer Lasche, mit der der Rand des Saugnapfs etwas abgelöst werden kann. Bei Verwendung einer klebrigen Fläche als Halteeinrichtung kann eine Hebelvorrichtung verwendet werden, mit der die Halteeinrichtung von der Fläche abgehoben werden kann. Die Halteeinrichtung kann auch vor jedem Betrieb überprüft werden, indem die Vorrichtung mit der Halteeiprichtung auf die Fläche aufgesetzt wird, die Vorrichtung sich danach selbständig festsaugt und die Halteeinrichtung selbst wieder ablöst.

In einer vorteilhaften Ausführungsform ist die Vorrichtung mit der Halteeinrichtung mittels eines Seils in der Weise verbunden, daß sie sich von der Halteeinrichtung abseilen kann. Damit kann verhindert werden, daß die Vorrichtung beim Auslösen der Sicherheitseinrichtung an einer nicht oder schlecht zugänglichen Stelle festgehalten wird und u. U. nur noch mit einem sehr großen Aufwand geborgen werden kann. Dazu kann die Vorrichtung mit der Halteeinrichtung über eine Sicherheitsleine verbunden sein, die nach dem Auslösen der Sicherheitseinrichtung abgewickelt wird, so daß sich die Vorrichtung langsam nach unten bewegt. Das Abwickeln der Sicherheitsleine bzw. das Abseilen der Vorrichtung kann auch durch einen äußeren Befehl beispielsweise mittels einer Fernbedienung ausgelöst werden. Die Halteeinrichtung ist dabei vorteilhafterweise so ausgebildet, daß sie auch aus der Entfernung von der Fläche gelöst werden kann. Dazu kann neben der Sicherheitsleine, an dem sich die Vorrichtung abseilt, eine wietere Leine abgewickelt werden, mit der durch Zug die Halteeinrichtung von der Fläche gelöst werden kann.

Zum Anhaften der Halteeinrichtung an die Fläche kann die Vorrichtung ein vorspannbares Federelement aufweisen. Damit kann unabhängig von der in der Vorrichtung bereitgestellten Energie eine große Menge mechanischer Energie vorgehalten werden, die in kürzester Zeit für das Anhaften der Halteeinrichtung eingesetzt werden kann. Weiterhin kann auf diese Weise auch erreicht werden, daß die Sicherheitseinrichtung einschließlich der Halteeinrichtung ohne Hilfsenergie funktionsfähig sind, so daß auch bei einem vollständigen Ausfall der Energieversorgung der Vorrichtung die Sicherheit gewährleistet ist. Dazu kann die Überwachung des Abstands zur Fläche und/oder des Unterdrucks sowie die Auslösung der vorspannbares Federelements für die Halteeinrichtung mit rein mechanischen Mitteln erfolgen. Um einen Betrieb der Vorrichtung bei nicht einsatzfähiger Sicherheitseinrichtung zu vermeiden, kann vorgesehen sein, daß die Vorrichtung nur bei gespanntem Federelement betrieben werden kann.

In einer vorteilhaften Ausführungsform weist die Vorrichtung eine Signaleinrichtung auf, die beim Ablösen von der Fläche aktiviert wird. Ein Fehlerfall kann so mit optischen und/oder mit akustischen Mitteln angezeigt werden. Gleichzeitig kann bei einem Ansprechen der Sicherheitseinrichtung der Betrieb der beispielsweise als Reinigungsgerät eingesetzten Vorrichtung unterbrochen werden.

Die erfindungsgemäße Sicherheitseinrichtung kann auch als Diebstahlsicherung, gegen ein unbefugtes Entfernen einer auf einer Fläche beweglichen Vorrichtung dienen, wozu die Einrichtung zum Lösen der Halteeinrichtung vorteilhafterweise so ausgebildet ist, daß sie nicht von unbefugten Personen betätigt werden kann, in dem sie beispielsweise mit einem Schloß oder einer geheimen Zahlenkombination gesichert ist.

Weitere Einzelheiten, Merkmale und Vorteile der Erfindung ergeben sich aus der folgenden Beschreibung eines Ausführungsbeispiels einer erfindungsgemäßen Vorrichtung unter Bezugnahme auf die Zeichnungen. Darin zeigen:
- Fig. 1: eine schematische Schnittansicht durch eine erfindungsgemäße Vorrichtung und
- Fig. 2: eine Draufsicht auf einer erfindungsgemäße Vorrichtung, die sich von einer ausgelösten Halteeinrichtung abgeseilt hat.

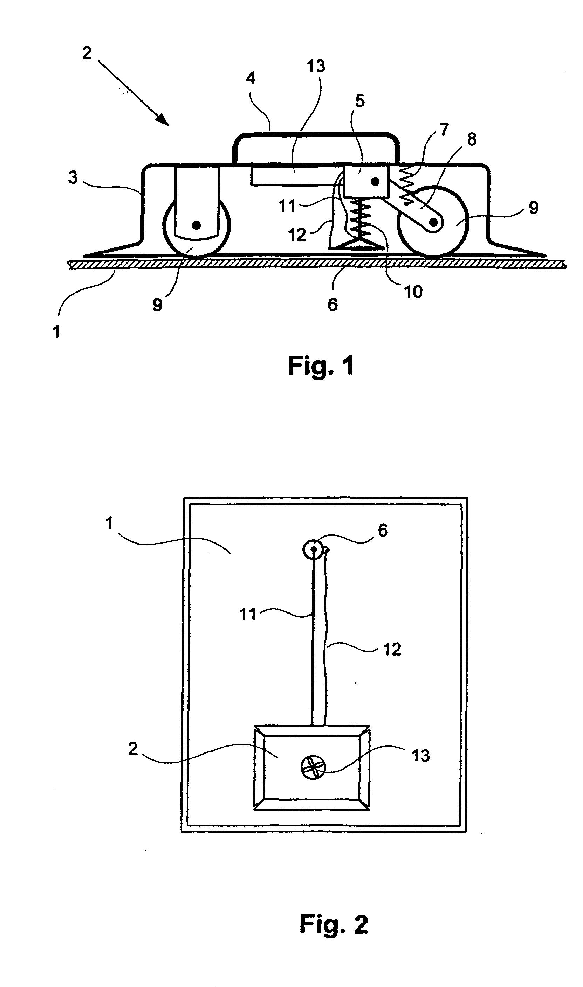

In Fig. 1 ist die Vorrichtung 2 in ihrer Betriebsposition auf einer Fläche 1 dargestellt. Die Vorrichtung 2 weist ein Gehäuse 3 auf, an dessen Oberseite ein Griff 4 und ein Unterdruckgebläse 13 angeordnet sind. Das Gehäuse 3 besitzt die Form einer Halbschale, die zusammen mit der Fläche 1 einen gegen die Umgebung im wesentlichen abgedichteten Hohlraum bilden kann. Dazu kann an den Rändern des Gehäuses 3 eine Schürze angeordnet sein, die unter leichtem Druck an der Fläche 1 anliegt. Mit dem Unterdruckgebläse 13 kann im Inneren des Gehäuses 3 ein Unterdruck erzeugt werden, durch den die Vorrichtung 2 an die Fläche 1 angepreßt wird.

Innen im Gehäuse 3 sind vier Räder 9 befestigt, auf denen die Vorrichtung 2 in einem festgelegten Abstand über die Fläche 1 rollen kann. Eine in der Darstellung rechts angeordnete Rolle 9 ist am Ende einer Schwinge 8 angeordnet, die an einer mit dem Gehäuse 3 verbundenen Sicherheitseinrichtung 5 angelenkt ist. Zwischen dem Gehäuse 3 und der Schwinge 8 ist eine Feder 7 vorgesehen, die die Schwinge 8 nach außen drückt.

Der Sicherheitseinrichtung 5 ist weiterhin eine Halteeinrichtung 6 in Form eines Saugnapfs zugeordnet, der mittels einer vorgespannten Feder 10 gegen die Fläche 1 gepreßt werden kann. An dem Saugnapf 6 ist ein Ende einer Sicherheitsleine 11 befestigt, die auf einer in der Zeichnung nicht dargestellten Winde innerhalb der Sicherheitseinrichtung 5 aufgewickelt ist. Weiterhin weist der Saugnapf 6 am Rand eine Lasche auf, mit der durch einfaches Anziehen der Rand des Saugnapfs 6 etwas angehoben werden kann, um ihn nach einem Anhaften an der Fläche 1 wieder lösen zu können. An der Lasche des Saugnapfes 6 ist ein Ende einer Reißleine 12 befestigt, die ebenfalls auf einer nicht dargestellten Winde in der Sicherheitseinrichtung 5 aufgewickelt ist.

Die Sicherheitseinrichtung 5 umfaßt ferner eine erste Verriegelungseinrichtung, die die Feder 10 nach dem Spannen im gespannten Zustand hält. Beim Hineinschwingen der Schwinge 8 in das Gehäuse 3 wird die erste Verriegelungseinrichtung entriegelt, wobei dann die Feder 10 von einer zweiten, von der Stellung der Schwinge 8 abhängigen Verriegelungseinrichtung im gespanntem Zustand gehalten wird. Dadurch wird erreicht, daß vor dem Aufsetzen der Vorrichtung 2 auf die Fläche 1, wenn die Schwinge 8 von der Feder 7 in einem ausgeschwenkten Zustand gehalten wird, die Feder 10 von der Bedienperson gespannt werden kann, worauf sie von den ersten Verriegelungseinrichtungen gehalten wird. Anschließend kann die Vorrichtung 2 auf die Fläche 1 aufgesetzt werden, wodurch die Schwinge 8 entgegen der Federwirkung der Feder 7 nach innen geschwenkt wird, wodurch die erste Verriegelungseinrichtung entriegelt und die Feder 10 von der zweiten, von der Stellung der Schwingen 8 abhängigen Verriegelungseinrichtung gehalten wird. Wenn im Fehlerfall der Anpreßdruck der Vorrichtung 2 an die Fläche 1 abnimmt und sich das Gehäuse 3 von der Fläche 1 entfernt, kann die Schwinge 8 von der Feder 7 wieder nach außen geschwenkt werden, wodurch die zweite Entriegelungseinrichtungen entriegelt und der Saugnapf 6 von der Feder 10 gegen die Fläche 1 gedrückt wird. Sobald die Sicherheitseinrichtung 5 ausgelöst hat, wird mit einem Signalgeber ein akustisches Signal abgegeben, um auf den Fehlerfall aufmerksam zu machen.

Die Winde für die Sicherheitsleine 11 ist so ausgebildet, daß sie sich bei Zug abwickeln läßt, wobei eine geschwindigkeitsabhängige Bremse nur ein langsames Abwickeln der Winde zuläßt. Die Winde für die Reißleine 12 ist mit der Winde für die Sicherheitsleine 11 derart verbunden, daß sie sich bei einem Abwickeln der Winde für die Sicherheitsleine 11 ebenfalls abwickelt.

Um die Vorrichtung mit aktivierter Sicherheitseinrichtung in seine Arbeitsstellung zu bringen, wird im abgenommenen Zustand der Saugnapf 6 hineingedrückt und damit die zugehörige Feder 10 gespannt, wobei die Schwinge 8 von der Feder 7 in einer ausgeschwenkten Stellung gehalten wird. Die Feder 10 wird im gespannten Zustand von der ersten Verriegelungseinrichtungen gehalten. Danach wird die Vorrichtung 2 auf die Fläche 1 aufgesetzt, wodurch die Schwinge 8 nach hinten gedrückt wird. Dabei wird die erste Verriegelungseinrichtung gelöst und die Feder 10 von der zweiten, mit der Schwinge 8 verbundenen Verriegelungseinrichtung gehalten. Bei der Inbetriebnahme im aufgesetzten Zustand wird das Unterdruckgebläse 13 eingeschaltet, das einen Unterdruck im Gehäuse 3 erzeugt und somit für das Anhaften der Vorrichtung 2 an der Fläche 1 sorgt.

Wenn nun im Störungsfall die Anziehungskraft der Vorrichtung 2 an die Fläche 1 beispielsweise durch Ausfall des Unterdruckgebläses 13 nachläßt und die Vorrichtung 2 sich von der Fläche 1 entfernt, wird die Schwinge 8 von der Feder 7 wieder nach außen gedrückt, so daß die zweiten Verriegelungseinrichtung entriegelt und die Feder 10 und somit den Saugnapf 6 freigibt. Der Saugnapf 6 wird an die Fläche 1 gedrückt und haftet dort an. Falls die Vorrichtung 2 sich ohne den Unterdruck nicht an der Fläche 1 halten kann, beispielsweise weil die Fläche 1 senkrecht steht, wird sie durch ihr Gewicht auf die Sicherheitsleine 11 einen Zug ausüben, über die sie mit dem Saugnapf 6 verbunden ist. Unter dem Zug beginnt die Winde für die Sicherheitsleine 11 sich gebremst abzuwickeln, wodurch sich die Vorrichtung 2 langsam abseilt. Gleichzeitig wird die Reißleine 12 abgewickelt, die entsprechend länger bemessen ist, so daß auf sie während und nach dem Abseilen kein Zug ausgeübt wird.

Um den Saugnapf 6 von der Fläche 1 zu entfernen, muß eine Bedienperson nur die Lasche am Rand anziehen. Dies kann auch durch Ziehen an der Reißleine 12 geschehen, wenn der Saugnapf 6 sich außer Reichweite befindet.

## Patentansprüche

1. Auf einer Fläche (1) bewegliche Vorrichtung (2), die zum Anhaften an der Fläche (1) Unterdruck zwischen sich und der Fläche (1) erzeugt, mit einer Sicherheitseinrichtung (5), die ein Ablösen von der Fläche (1) überwacht, und mit einer Halteeinrichtung (6), die von der Sicherheitseinrichtung (5) beim Ablösen von der Fläche (1) an die Fläche (1) angehaftet wird und die die bewegliche Vorrichtung (2) an der Fläche (1) hält, **dadurch gekennzeichnet, dass** die Sicherheitseinrichtung (5) zum Überwachen des Ablösens von der Fläche (1) den Abstand der Vorrichtung (2) zu der Fläche (1) überwacht.

2. Vorrichtung nach Anspruch 1, **dadurch gekennzeichnet, daß** sie wenigstens ein gegenüber der Vorrichtung (2) bewegliches Fahrwerk (9) aufweist und die Sicherheitseinrichtung (5) zum Überwachen des Ablösens von der Fläche (1) den Abstand des Fahrwerks (9) zur Vorrichtung (2) überwacht.

3. Vorrichtung nach Anspruch 1 oder 2 **dadurch gekennzeichnet, daß** die Sicherheitseinrichtung (5) zum Überwachen des Ablösens von der Fläche (1) den Unterdruck zwischen der Vorrichtung (2) und der Fläche (1) überwacht.

4. Vorrichtung nach einem der Ansprüche 1 bis 3, **dadurch gekennzeichnet, daß** die Halteeinrichtung (6) wenigstens einen Saugnapf aufweist.

5. Vorrichtung nach Anspruch 4, **dadurch gekennzeichnet, daß** sie eine Einrichtung zum nochmaligen Andrücken eines an die Fläche (1) angehafteten Saugnapfs (6) aufweist.

6. Vorrichtung nach einem der Ansprüche 1 bis 5, **dadurch gekennzeichnet, daß** die Halteeinrichtung (6) wenigstens ein Klebverbindungsmittel aufweist.

7. Vorrichtung nach einem der Ansprüche 1 bis 6, **dadurch gekennzeichnet, daß** sie eine von außen betätigbare Einrichtung (12) zum Lösen der Halteeinrichtung (6) von der Fläche (1) aufweist.

8. Vorrichtung nach einem der Ansprüche 1 bis 7, **dadurch gekennzeichnet, daß** sie mit der Halteeinrichtung (6) mittels eines Seils (11) in der Weise verbunden ist, daß sie sich abseilen kann.

9. Vorrichtung nach einem der Ansprüche 1 bis 8, **dadurch gekennzeichnet, daß** sie ein vorspannbares Federelement (10) zum Anhaften der Halteeinrichtung (6) an die Fläche (1) aufweist.

10. Vorrichtung nach einem der Ansprüche 1 bis 9, **dadurch gekennzeichnet, daß** sie eine Signalvorrichtung aufweist, die ein Ablösen von der Fläche (1) signalisiert.

## Claims

1. Device (2) which is movable on a surface (1) and which for adhesion to the surface (1) produces underpressure between itself and the surface (1), comprising a safety device (5) which monitors detaching from the surface (1) and a retaining device (6) which on detaching from the surface (1) is adhered by the safety device (5) to the surface (1) and which retains the movable device (2) at the surface (1), **characterised in that** the safety device (5) for monitoring detaching from the surface (1) monitors the spacing of the device (2) from the surface (1).

2. Device according to claim 1, **characterised in that** it comprises at least one chassis (9) movable relative to the device (2) and the safety device (5) for monitoring detaching from the surface (1) monitors the spacing of the chassis (9) from the device (2).

3. Device according to claim 1 or 2, **characterised in that** the safety device (5) for monitoring detaching from the surface (1) monitors the underpressure between the device (2) and the surface (1).

4. Device according to one of claims 1 to 3, **characterised in that** the retaining device (6) comprises at least one sucker.

5. Device according to claim 4, **characterised in that** it comprises a device for repeated pressing of a sucker (6) adhered to the surface (1).

6. Device according to one of claims 1 to 5, **characterised in that** the retaining device (6) comprises at least one glue connecting means.

7. Device according to one of claims 1 to 6, **characterised in that** it comprises an externally actuable device (12) for releasing the retaining device (6) from the surface (1).

8. Device according to one of claims 1 to 7, **characterised in that** it is connected with the retaining device (6) by means of a cable (11) in such a manner that it can lower itself on the cable.

9. Device according to one of claims 1 to 8, **characterised in that** it comprises a spring element (10), which can be biased, for adhering the retaining device (6) to the surface (1).

10. Device according to one of claims 1 to 9, **characterised in that** it comprises a signal device which signals detaching from the surface (1).

## Revendications

1. Dispositif (2) apte à se déplacer sur une surface (1 ), qui crée entre lui et la surface (1) une dépression qui le fait adhérer à la surface (1), doté d'un dispositif de sécurité (5) qui surveille le décrochement par rapport à la surface (1) et d'un dispositif de maintien (6) que le dispositif de sécurité (5) fait adhérer à la surface (1) en cas de décrochement par rapport à la surface (1) et qui maintient le dispositif mobile (2) sur la surfacé (1), **caractérisé en ce que** le dispositif de sécurité (5) surveille la distance entre le dispositif (2) et la surface (1) pour surveiller le décrochement par rapport à la surface (1).

2. Dispositif selon la revendication 1, **caractérisé en ce qu'**il présente au moins un train de roulement (9) mobile par rapport au dispositif (2) et **en ce que** le dispositif de sécurité (5) surveille la distance du train de roulement (9) par rapport au dispositif (2) pour surveiller le décrochement par rapport à la surface (1).

3. Dispositif selon les revendications 1 ou 2, **caractérisé en ce que** le dispositif de sécurité (5) surveille la dépression entre le dispositif (2) et la surface (1) pour surveiller son décrochage par rapport à la surface (1).

4. Dispositif selon l'une des revendications 1 à 3, **caractérisé en ce que** le dispositif de maintien (6) présente au moins une ventouse.

5. Dispositif selon la revendication 4, **caractérisé en ce qu'**il présente un dispositif qui repousse encore une ventouse (6) qui adhère à la surface (1).

6. Dispositif selon l'une des revendications 1 à 5, **caractérisé en ce que** le dispositif de maintien (6) présente au moins un moyen de liaison par collage.

7. Dispositif selon l'une des revendications 1 à 6, **caractérisé en ce qu'**il présente un dispositif (12), actionnable de l'extérieur, pour libérer le dispositif de maintien (6) de la surface (1).

8. Dispositif selon l'une des revendications 1 à 7, **caractérisé en ce qu'**il est relié au dispositif de maintien (6) au moyen d'un câble (11) de manière à pouvoir se dérouler de ce câble.

9. Dispositif selon l'une des revendications 1 à 8, **caractérisé en ce qu'**il présente un élément de ressort (10) apte à être précontraint pour faire adhérer le dispositif de maintien (6) à la surface (1).

10. Dispositif selon l'une des revendications 1 à 9, **caractérisé en ce qu'**il présente un dispositif de signalisation qui signale un décrochement par rapport à la surface (1).
